# EUROPEAN PATENT APPLICATION

(11) **EP 1 108 589 A2**
(43) Date of publication of application: **20.06.2001**
(21) Application number: 00204501.1
(22) Date of filing: 14.12.2000
(51) Int. Cl.: B60K 15/03

(54) **Method of making permeation barrier fuel tank**

(30) Priority: 18.12.1999 US 172558 P; 30.08.2000 US 651211
(71) Applicant: Delphi Technologies, Inc., Troy, MI 48007 (US)
(72) Inventor: Short, William T., Southfield, MI 48076 (US)
(74) Representative: Denton, Michael John

(57) **Abstract**

A method of making a permeation barrier fuel tank (10) for a vehicle includes the steps of providing a plurality of layers (30,32,34,36,38). The layers (30,32,34,36,38) include at least an inner layer (30), an outer layer (38), and a fuel permeation barrier layer (34) between the inner layer (30) and the outer layer (38). The method also includes the steps of consolidating the layers (30,32,34,36,38) to form a sheet and thermoforming the sheet into the permeation barrier fuel tank (10).

## Description

### TECHNICAL FIELD

The present invention relates generally to fuel tanks for vehicles and, more particularly, to a method of making a permeation barrier fuel tank for a vehicle.

### BACKGROUND OF THE INVENTION

It is known to provide a fuel tank such as a plastic fuel tank in a vehicle to hold fuel to be used by an engine of the vehicle. A current method or process for making plastic fuel tanks with a high level of resistance to fuel permeation is by blow molding. Generally, three to five extruders are used in concert to produce a multi-layered blown parison that is formed into the actual fuel tank. Another method of making such plastic fuel tanks involves thermoforming flat sheet stock into fuel tanks with vacuum/pressure, which requires a complex multi-extruder process to make the initial stock. In both methods, performance requirements demand a new multi-layer construction including a barrier layer sandwiched between two or more layers of the main tank wall material. However, the co-extrusion process is relatively expensive, very large, and complex. Also, significant amounts of material containing expensive tie and barrier layers fall outside of the usable area, creating relatively expensive scrap or mixed regrind, which can complicate the process even more.

Therefore, it is desirable to provide an improved method of making a multiplayer sheet used to make fuel tank for a vehicle, or other container, that has an effective fuel permeation barrier to prevent evaporative emission. It is also desirable to provide a method of making a permeation barrier fuel tank for a vehicle that significantly reduces evaporative emission and cost of the fuel tank.

### SUMMARY OF THE INVENTION

It is, therefore, one object of the present invention to provide a new method of making a thermoformable multi-layer permeation barrier sheet from which a vehicle fuel tank can be formed.

It is another object of the present invention to provide a new method of making a permeation barrier fuel tank for a vehicle.

It is yet another object of the present invention to provide a method of making a fuel tank that significantly reduces evaporative emissions and cost of plastic fuel tanks.

To achieve the foregoing objects, the present invention is a method of making a permeation barrier fuel tank for a vehicle including the steps of providing a plurality of layers. The layers include at least an inner layer, an outer layer, and a fuel permeation barrier layer between the inner layer and the outer layer. The method also includes the steps of consolidating the layers to form a sheet and thermoforming the sheet into the permeation barrier fuel tank.

One advantage of the present invention is that an improved method of making a permeation barrier fuel tank is provided for a vehicle that can have a more effective fuel permeation barrier leading to less evaporative emissions. Another advantage of the present invention is that the method is used for making a thermoformable sheet with anti-permeation properties through piece lamination, resulting in cost savings of the fuel tank. Yet another advantage of the present invention is that the method reduces the cost of the permeation barrier fuel tank because expensive tie and barrier layers can be die cut to size to cover only area actually used for the fuel tank. Still another advantage of the present invention is that method allows additional barrier layers to be added or profiled to offset thinning during forming for greater efficiency and more uniform wall size, or to increase effectiveness of the permeation barrier of a range of fuel types. A further advantage of the present invention is that the method reduces cost and weight of the fuel tank by replacing polymeric tie-layers with a thin adhesion promoting coating. Yet a further advantage of the present invention is that the method expands process flexibility for changing barrier layer thickness or composition to maximize the fuel tank effectiveness. Still a further advantage of the present invention is that the method allows the process to make a thick wall layer and thin tie and barrier layers to be separately optimized, which in turn yields much greater control of the layer thickness and very much greater line speeds (100x) for the tie and barrier layers.

Other objects, features, and advantages of the present invention will be readily appreciated, as the same becomes better understood, after reading the subsequent description taken in conjunction with the accompanying drawings.

### BRIEF DESCRIPTION OF THE DRAWINGS

Figure 1 is a perspective view of a permeation barrier fuel tank, according to the present invention.

Figure 2 is an exploded view of a sheet used in making the permeation barrier fuel tank of Figure 1.

Figure 3 is an elevational view of the sheet of Figure 2 used in making the permeation barrier fuel tank of Figure 1.

Figure 4 is a fragmentary elevational view of the permeation barrier fuel tank of Figure 1.

Figure 5 is an exploded view of another embodiment, according to the present invention, of a sheet used in making the permeation barrier fuel tank of Figure 4.

Figure 6 is an elevational view of the sheet of Figure 5 used in making the permeation barrier fuel tank of Figure 4.

Figure 7 is an exploded view of yet another embodiment, according to the present invention, of a sheet used in making a permeation barrier fuel tank.

Figure 8 is an elevational view of the sheet of Figure 7 used in making a permeation barrier fuel tank.

Figure 9 is a fragmentary elevational view of the permeation barrier fuel tank made with the sheet of Figures 7 and 8.

### DESCRIPTION OF THE PREFERRED EMBODIMENT

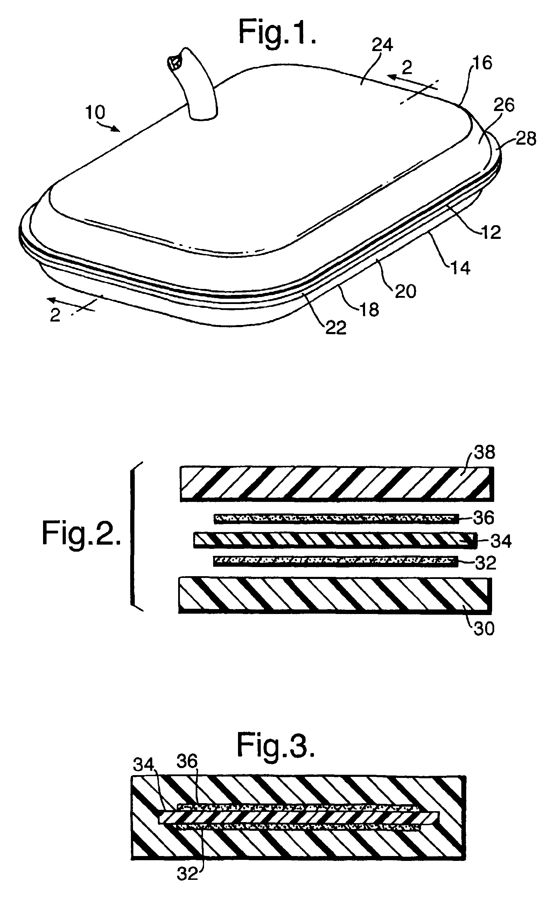

Referring to the drawings and in particular Figure 1, one embodiment of a permeation barrier fuel tank 10, according to the present invention, is shown for a vehicle (not shown). The permeation barrier fuel tank 10 includes a tank shell 12. In this embodiment illustrated, the tank shell 12 is of a generally rectangular type. The tank shell 12 includes a first or lower half shell 14 and a second or upper half shell 16. The lower half shell 14 has a base wall 18 and a side wall 20 around a periphery of the base wall 18 and extending generally perpendicular thereto. The side wall 20 has a flange 22 extending outwardly and generally perpendicular thereto. The upper half shell 16 has a base wall 24 and a side wall 26 around a periphery of the base wall 24 and extending generally perpendicular thereto. The side wall 26 has a flange 28 extending outwardly and generally perpendicular thereto. The flanges 22 and 28 of the lower half shell 14 and upper half shell 16, respectively, are joined together to form a seam by suitable means such as by thermoforming, compression molding or friction welding. The lower half shell 14 and upper half shell 16 are made of a rigid material such as a thermoformable plastic.

Referring to Figures 1 through 4, the permeation barrier fuel tank 10 has the base walls 18,24, side walls 20,26, and flanges 22,28 are formed from a plurality of layers 30,32,34,36,38. The first or inner layer 30 is made from a thermoformable polymer such as a high-density polyethylene (HDPE) or similar polyolefin, which is a conventional material known in the art. The first layer 30 has a predetermined thickness of approximately two millimeters (2.00 mm).

The second layer 32 is a tie-layer made from an adhesive polymer such as maleated polyethylene (ADMER Grade GT6A), which is a conventional material known in the art. The second layer 32 has a predetermined thickness of approximately 0.07 mm.

The third layer 34 is a barrier layer made from a barrier material such as an ethylene vinyl alcohol (EVOH) copolymer, which is a conventional material known in the art. The third layer 34 has a predetermined thickness of approximately 0.1 mm to approximately 1.0 mm.

The fourth layer 36 is a tie layer made from an adhesive polymer such as maleated polyethylene (ADMER Grade GT6A), which is a conventional material known in the art. The fourth layer 36 has a predetermined thickness of approximately 0.07 mm. It should be appreciated that the second and fourth layers 32 and 34 may be the same length as the third layer 34.

The fifth or outer layer 38 is made from a thermoformable polymer such as a high-density polyethylene (HDPE) or similar polyolefin, which is a conventional material known in the art. The fifth layer 46 has a predetermined thickness of approximately two millimeters (2 mm). It should be appreciated that the main wall layers 30 and 38 can be made from 100% virgin polymer or admixed with up to 100% reground polymer (from tank scrap), either homogenously compounded with the wall polymer 30,38 or affixed to it as a discrete additional layer (not shown).

In making or manufacturing the permeation barrier fuel tank 10, several methods, according to the present invention, may be used. As illustrated in Figures 2 through 4, preferably, the method includes the steps of bringing all layers 30,32,34,36,38 together with sufficient heat and pressure at a thermoformer (not shown), consolidating the layers 30,32,34,36,38, and forming a lamination of the separate layers 30,32,34,36,38 into a sheet. The method includes the steps of final bonding the layers 30,32,34,36,38 as part of thermoforming the permeation barrier fuel tank 10 by a conventional thermoforming process. This process requires the temperatures of the sheet during the forming process to be hot enough to consolidate the layers 30,32,34,36,38, and that the cycle time be sufficient for any chemical reactions between the tie layers 32,36 and the fuel permeation barrier layer 34 to take place as illustrated in Figure 3. It should be appreciated that piece lamination of sheet used in the method of making the permeation barrier fuel tank 10 may be used to make other barrier containers.

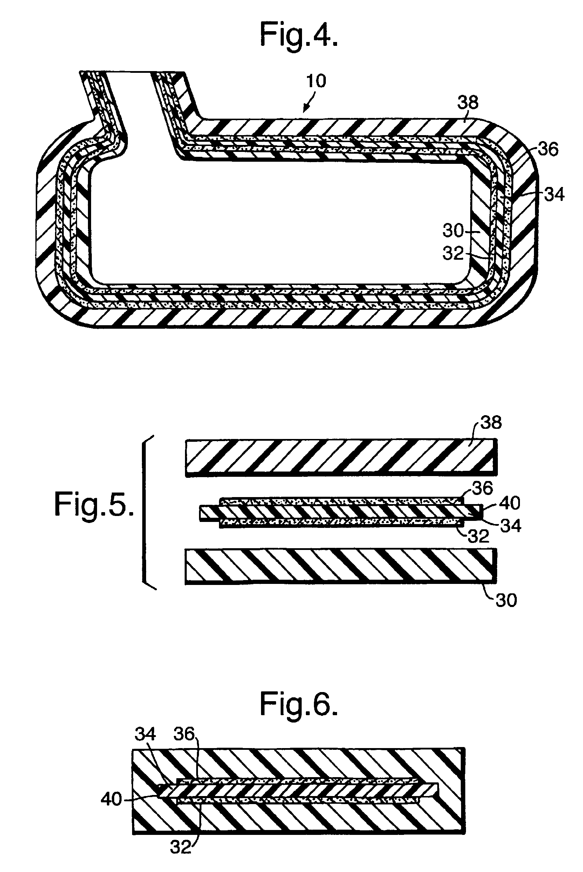

In another embodiment of the method, according to the present invention, the method includes the step of co-extruding the tie layers 32,36 and barrier layer 36 and forming a bonded layer 40 that can be die cut to size or optionally rolled for later use as illustrated in Figures 5 and 6. This can be done by co-extruding the barrier and tie layers simultaneously or by extrusion laminating the tie layer to a solidified film at the barrier material, which has been formed previously. The bonded layer 40 is sandwiched between pre-cut sheets of the wall material or layers 30 and 38 of the thermoformable polymer and consolidated the during thermoforming process to form the permeation barrier fuel tank 10 of a multi-layer structure as illustrated in Figure 4. This process requires only that the temperature of the sheet during the forming process be hot enough to consolidate the wall layers 30 and 38 and the tie-layers 32 and 36 since the critical bonding reaction with the barrier layer 34 is completed during the co-extrusion or extrusion lamination process. It should be appreciated that co-extruding or extrusion lamination the tie layers 32 and 36 and the barrier layer 34 greatly simplifies the manufacturing process, thereby reducing cost by, among other things, allowing extrusion speeds up to 100 times greater than that available when coextruding with the thick wall layers 30 and 38.

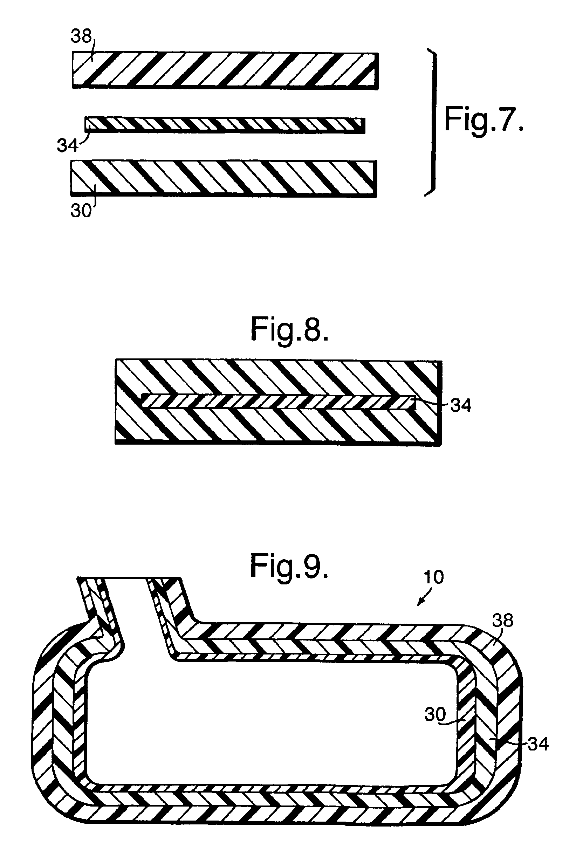

In yet another embodiment of the method, according to the present invention, illustrated in Figures 7 through 9, the method includes the step of coating the barrier layer 34 with a non-polymeric adhesion promoter consisting of a long chain nonpolar radical compatible with the material of the wall layers 30 and 38 and a reactive radical able to bond with the barrier layer 34. This process also requires only that the temperatures of the sheet during the forming process be hot enough to consolidate the wall layers 30 and 38 and the adhesion coating. A wide variety of low temperature tie-coats can be used with the barrier layer 34. It should be appreciated that, in all of the methods, the piece laminated sheet stock is thermoformed in the conventional manner of co-extruded stock to form the permeation barrier fuel tank 10 of a multi-layer structure as illustrated in Figure 6. It should also be appreciated that cost and weight reduction is achieved by replacing the polymeric tie layer with a relatively thin coating.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

1. A method of making a permeation barrier fuel tank (10) for a vehicle, said method comprising the steps of:
providing a plurality of layers (30,32,34, 36,38), the layers comprising at least an inner layer (30), an outer layer (38) and a fuel permeation barrier layer (34) disposed between the inner layer (30) and the outer layer (38); and
consolidating the layers (30,34,38) to form a sheet and thermoforming the sheet into the permeation barrier fuel tank (10).

2. A method as set forth in claim 1 including the step of providing a pair of adhesive layers (32,36).

3. A method as set forth in claim 1 wherein said step of providing comprises co-extruding the barrier layer (34) and adhesive layers (32,36) together such that one adhesive layer (32,36) is on each side of the fuel permeation barrier layer (34).

4. A method as set forth in claim 1 wherein said step of providing comprises extrusion lamination of the adhesive layers (32,36) onto a solidified film of barrier layer (34) made separately such that the adhesive layer (32,36) is on each side of the fuel permeation barrier layer (34).

5. A method as set forth in claim 1 including the step of providing an adhesive coating.

6. A method as set forth in claim 5 including the step of coating opposed sides of the fuel permeation barrier layer (34) with the adhesive coating.

7. A method as set forth in claim 1 including the step of providing a pair of adhesive layers (32,36).

8. A method as set forth in claim 7 wherein the step of providing comprises extruding the layers (32,34,36,38) as separate layers.

9. A method as set forth in claim 8 including the step of disposing one (32) of the adhesive layers (32,36) between the inner layer (30) and fuel permeation barrier layer (34) and the other (36) of the adhesive layers (32,36) between the outer layer (38) and the fuel permeation barrier layer (34).

10. A method as set forth in claim 9 including the step of laminating the separate layers (30,32,34,36,38) to form a sheet.

11. A method as set forth in claim 1 including the step of thermoforming the sheet to form the permeation barrier fuel tank (10).

12. A method of making a fuel permeation barrier fuel tank (10) for a vehicle comprising:
extruding a plurality of layers (30,32,34, 36,38), the layers comprising at least an inner layer (30), an outer layer (38), a fuel permeation barrier layer (34) disposed between the inner layer (30) and the outer layer (38), a first adhesive layer (32) disposed between the inner layer (30) and fuel permeation barrier layer (34), and a second adhesive layer (36) disposed between the fuel permeation barrier layer (34) and the outer layer (38); and
consolidating the layers (30,32,34,36,38) to form a sheet and thermoforming the sheet into the permeation barrier fuel tank (10).

13. A method as set forth in claim 12 wherein said step of extruding comprises co-extruding the barrier layer (34) and adhesive layers (32,36) together such that one adhesive layer (32,36) is on each side of the fuel permeation barrier layer (34).

14. A method as set forth in claim 12 wherein said step of extruding comprises extrusion lamination of the adhesive layers (32,36) onto a solidified film of barrier layer (34) made separately such that the adhesive layer (32,36) is on each side of the fuel permeation barrier layer (34).

15. A method as set forth in claim 12 wherein the step of extruding comprises extruding the layers 30,32,34,36,38) as separate layers (30,32,34,36,38).

16. A method as set forth in claim 15 including the step of laminating the separate layers (30,32,34, 36,38) to form a sheet.

17. A method as set forth in claim 12 including the step of thermoforming the sheet to form the permeation barrier fuel tank (10).

18. A method of making a permeation barrier fuel tank (10) for a vehicle, said method comprising the steps of:
extruding a plurality of layers (30,34,38), the layers comprising at least an inner layer (30), an outer layer (38) and a fuel permeation barrier layer (34) disposed between the inner layer (30) and the outer layer (38);
providing an adhesive coating; and
consolidating the adhesive coating and layers (30,34,38) to form a sheet and thermoforming the sheet into the permeation barrier fuel tank (10).

19. A method as set forth in claim 18 including the step of coating opposed sides of the fuel permeation barrier layer (34) with the adhesive coating.

20. A method as set forth in claim 18 including the step of thermoforming the sheet to form the permeation barrier fuel tank (10).
